# EUROPÄISCHE PATENTSCHRIFT

(11) **EP 2 623 238 B1**
(45) Veröffentlichungstag und Bekanntmachung des Hinweises auf die Patenterteilung: **06.08.2014**
(21) Anmeldenummer: 12195808.6
(22) Anmeldetag: 06.12.2012
(51) Int. Cl.: B23B 31/28, B23B 31/177, B23B 31/16, B23B 31/36

(54) **Spannfutter und Verfahren zum Betrieb dessen**
Chucking device and method of operation thereof
Mandrin de fixation et procédé de fonctionnement de celui-ci

(30) Priorität: 01.02.2012 DE 102012100821
(43) Veröffentlichungstag der Anmeldung: 07.08.2013
(73) Patentinhaber: Röhm GmbH, 89567 Sontheim/Brenz (DE)
(72) Erfinder: Hangleiter, Eugen, 89568 Hermaringen (DE); Taglang, Johann, 89441 Medlingen (DE)
(74) Vertreter: Hentrich, Swen

(56) Entgegenhaltungen:
- DE-A1- 10 150 710
- DE-U1- 9 113 879

## Beschreibung

Die Erfindung betrifft ein Spannfutter gemäss dem Oberbegriff des Patentanspruchs 1.

Eine Spannvorrichtung mit einer Zentrierspitze ist bereits aus der DE 91 13 879 U1 bekannt. Hierbei werden die Spannbacken über einen hydraulisch beaufschlagten Kolben verstellt.

Eine Spannvorrichtung der eingangs genannten Art ist aus der DE 101 50 710 A1 bekannt. Dabei wird beschrieben, dass zur Verstellung der Zentrierspitze ein elektromechanischer Antrieb eingesetzt werden kann ohne auf dessen konkrete Ausgestaltung einzugehen. Alle darin beschriebenen Ausführungsformen verwenden Hydraulikkomponenten, um die Zentrierspitze zu verstellen.

Häufig wird also die Verstellung der Zentrierspitze mit einem Hydraulikaufbau realisiert. Dabei kann eine Kolbenkammer zur Verstellung der Spitze im Kolben zur Betätigung der Spannbacken vorgesehen sein, um einen platzsparenden Doppelkolbenaufbau zu schaffen.

Bei der Kurbelwellenfertigung werden die Kurbelwellenrohlinge auf deren Stirnflächen plangefräst. Anschließend wird auf jeder Stirnfläche eine Zentrierbohrung gesetzt, die eine exakte axiale Einspannung der Kurbelwelle für deren Nachfolgebearbeitung in radialer Richtung ermöglichen soll. Üblicherweise wird die Kurbelwelle mittels zwei Zentrierspitzen gespannt, wovon eine fest und die andere axial verstellbar gelagert ist. Mit der hydraulischen Anordnung zur Verstellung der Zentrierspitze lassen sich die Forderungen nach umweltfreundlichen Technologien mit geringem Energieverbrauch nur bedingt umsetzen. Aus dem Kennen entsteht die Notwendigkeit neue Wege zum Erzeugen der axialen Betätigung zu suchen.

Es ist daher die Aufgabe der vorliegenden Erfindung, ein Spannfutter und ein Verfahren zum Betrieb eines Spannfutters der eingangs genannten Art bereitzustellen, wobei die Spannkomponenten ohne hydraulische Bauteile auskommen und gleichzeitig eine erhöhte Betriebssicherheit bereitstellen.

Bei dem erfindungsgemäßen Spannfutter wird diese Aufgabe dadurch gelöst, dass zur axialen Verstellung der Zentrierspitze ein Spindeltrieb vorgesehen ist.

Mit der Erfindung ist der Vorteil verbunden, dass der Elektromotor die Zentrierspitze elektrisch verstellt. Damit ist gegenüber einer binären hydraulischen, eine feine, stufenlos einstellbare und energieeffiziente axiale Verstellung der Zentrierspitze ermöglicht. In der Kurbelwellenfertigung wird dementsprechend der Elektromotor betrieben, um die Zentrierspitze an der Stirnfläche der Kurbelwelle zu zentrieren, wobei anschließend die die Kurbelwelle in radialer Richtung sichernden Spannbacken gespannt werden.

Als erfindungswesentlich hat es sich gezeigt, dass zur axialen Verstellung ein Spindeltrieb vorgesehen ist. Dadurch ist eine einfache Möglichkeit geschaffen die Rotationsbewegung des Elektromotors in eine Translationsbewegung zur Verstellung der Zentrierspitze umzuwandeln.

Es ist sinnvoll, wenn der Spindeltrieb zwischen einer durch den Elektromotor antreibbaren Stange und der Zentrierspitze ausgebildet ist. Diese Stange kann dabei dazu verwendet werden, um den Elektromotor nicht direkt an dem Spindeltrieb anschließen zu müssen. Dadurch kann eine Strecke zwischen dem Elektromotor und der Zentrierspitze überwunden werden, wodurch der Elektromotor räumlich isoliert von den bei Betrieb des Spannfutters umlaufenden Teilen des Futterkörpers angeordnet werden kann.

Als bevorzugt hat es sich erwiesen, dass ein lösbar mit der Zentrierspitze verbundenes Spindelglied vorgesehen ist. Dieses Spindelglied bewegt sich axial bei Rotation des Elektromotors bzw. der Stange und nimmt dabei die Zentrierspitze mit. Sollte nach Abnutzung des Spindeltriebs eine Erneuerung der beteiligten Komponenten anstehen, so kann dieses Spindelglied ersetzt werden, ohne die ganze Zentrierspitze austauschen zu müssen.

Weiterhin ist vorteilhaft, wenn zwischen dem Spindelglied und der Zentrierspitze ein federndes Element angeordnet ist. Dieses federnde Element wird eingesetzt, um zu vermeiden, dass die Zentrierspitze mit der vollen Kraft des Elektromotors auf die Stirnfläche eines Rohlings auffährt und diesen dadurch beschädigt.

Als besonders bevorzugt hat es sich erwiesen, dass die Stange in einem im Futterkörper ausgebildeten Stangenlager gelagert ist. Ist die von der Stange zum Elektromotor zu überbrückende Strecke sehr lange, so kann eine kleine Unwucht in der Umlaufbewegung des Elektromotors einen großen Radialanteil in der umlaufenden Bewegung an dem der Zentrierspitze zugewandten Ende der Stange zur Folge haben. Um diesen Radialanteil auszugleichen und um eine sichere axiale Führung zu gewährleisten, wird die Stange in dem Stangenlager gelagert.

Weiterhin ist es günstig, wenn zwischen dem Elektromotor und der Stange ein Getriebe, vorzugsweise ein Planetengetriebe ausgebildet ist. Dadurch kann ein erhöhtes an der Stange wirkendes Drehmoment angelegt werden.

Von Vorteil ist auch, wenn zur Betätigung der Spannbacken eine mit einem elektrisch betätigbaren Spannmotor antreibbare Gewindehohlstange vorgesehen ist. Dadurch kann die Spannbackenbetätigung ebenfalls auf einen Einsatz von Hydraulikkomponenten verzichten. Dementsprechend, kann die Zentrierspitze mit elektrischer Betätigung zunächst einen Kurbelwellenrohling axial zentrieren, welcher anschließend durch die Spannbacken in radialer Richtung gesichert wird.

Es ist besonders sinnvoll, wenn zwischen der Gewindehohlstange und dem Rotor des Spannmotors ein Gleitkeilgetriebe vorgesehen ist, mit einem nicht umlaufenden Hohlrad, einem die Rotorumdrehung erfassenden Wellengenerator und einer mit der Gewindehohlstange in drehmomentübertragender Weise gekoppelten Stahlbüchse. Damit ist es möglich, die hohe Drehzahl des Motors auf eine kleinere Drehzahl der Gewindehülse zu übertragen, wodurch die Spannbacken sich sehr fein verstellen lassen.

Als günstig hat es sich erwiesen, wenn ein Gewindetrieb an der Gewindehohlstange und den im Futterkörper geführten Mitteln zur Verstellung der Spannbacken ausgebildet ist. Hierdurch können die im Futterkörper im Wesentlichen parallel zur Futterkörperlängsachse angeordneten Mittel zur Verstellung der Spannbacken axial verstellt werden, wobei an deren den Spannbacken zugewandten Seiten Spannkeile angeordnet werden können, die die Spannbacken radial nach innen bzw. nach außen drücken.

Vorteilhaft ist außerdem, wenn die Stange ohne Kontakt durch die Gewindehohlstange durchgeführt ist. Dadurch kann die Betätigung des Spannfutters sehr platzsparend ausgebildet werden.

Eine besonders bevorzugte Ausführungsform ist dadurch gekennzeichnet, dass zwischen der Zentrierspitze und dem Elektromotor eine axial verstellbare und über einen Reibschluss lösbar mit der Zentrierspitze verbundene Spindelstange vorgesehen ist. Dadurch ist es möglich, die Spindelstange von der Zentrierspitze bei Bedarf zu entkoppeln. Der Elektromotor muss während des Einsatzes des Spannfutters nicht mit diesem umlaufen, die Anstellung der Zentrierspitze bleibt dennoch aufrecht erhalten.

Es hat sich im Konzept als sinnvoll erwiesen, wenn die Zentrierspitze mehrteilig aus einer Spindelstangenaufnahme, mindestens einem Federelement und einem Spitzenteil gebildet ist. Dadurch ist auch in dieser Konfiguration durch das Federpaket gewährleistet, dass die Zentrierspitze nicht mit voller Kraft des Elektromotors auf die Stirnfläche eines zu spannenden Werkstückes auffährt.

Vorteilhafter Weise ist zwischen der Spindelstange und dem Rotor des Elektromotors ein Spindeltrieb ausgebildet ist, womit hier ebenfalls eine sinnvolle Möglichkeit geschaffen ist, die Rotationsbewegung des Motors in eine Translation der Spindelstange zu überführen.

Besonders günstig ist es, wenn eine den Elektromotor regelnde Steuereinheit vorgesehen ist. Damit kann die Zentrierspitze durch den Elektromotor mit der gleichen Umdrehungszahl wie das Spannfutter um ihre Achse gedreht werden, womit sich diese nicht aus der zentrierten Stellung beim Betrieb des Spannfutters verstellt.

Im Rahmen der Erfindung ist es ebenfalls sinnvoll, ein Verfahren zum Betrieb eines Spannfutters bereitzustellen, mit einer axial verstellbaren im Futterkörper geführten Zentrierspitze, mit einen lösbar über ein Federelement mit der Zentrierspitze verbundenen Spindelstangenaufnahme, mit einem ein Messgerät aufweisenden Elektromotor und mit einem Spindeltrieb zur Umwandlung einer Rotationsbewegung in eine Translation, wobei der Spindeltrieb zur Umwandlung einer Rotationsbewegung in eine Translation durch die Rotation des Elektromotors eine axiale Verstellung der Spindelstangenaufnahme unter einer Mitnahme der Zentrierspitze bewirkt bis bei einer Relativbewegung der Spindelstangenaufnahme bezüglich der Zentrierspitze eine Kraft gegen das Federelement aufgebracht wird und die dadurch verrichtete Arbeit durch einen sich ändernden Messwert am Messgerät detektiert wird.

Hierdurch dient der Messwert dazu, zu ermitteln, wann die Zentrierspitze auf die Stirnfläche eines zu bearbeitenden Werkstücks aufgefahren ist, um dieses zu zentrieren. Vorzugsweise ist das Messgerät dabei als ein Amperemeter gebildet und misst einen Stromfluss. Der Elektromotor wird immer mit derselben Drehzahl betrieben, wobei er unterschiedlich viel Strom in Abhängigkeit des am Rotor wirkenden Widerstandes benötigt. Diese Änderung des benötigten Stromes korreliert mit der gegen das Federelement aufzubringenden Kraft. Je größer die Stromstärke wird, desto stärker liegt folglich die Zentrierspitze am Werkstück an.

Im folgenden wird die Erfindung an in der Zeichnung dargestellten Ausführungsbeispielen näher erläutert; es zeigen:
- Fig. 1: einen Längsschnitt durch eine erste Ausführungsform des erfindungsgemäßen Spannfutters,
- Fig. 2: einen Längsschnitt durch ein aus dem Stand der Technik bekanntes Spannfutter mit Hydraulikkomponenten, und
- Fig. 3: einen Längsschnitt durch eine weitere Ausführungsform gemäß der Erfindung.

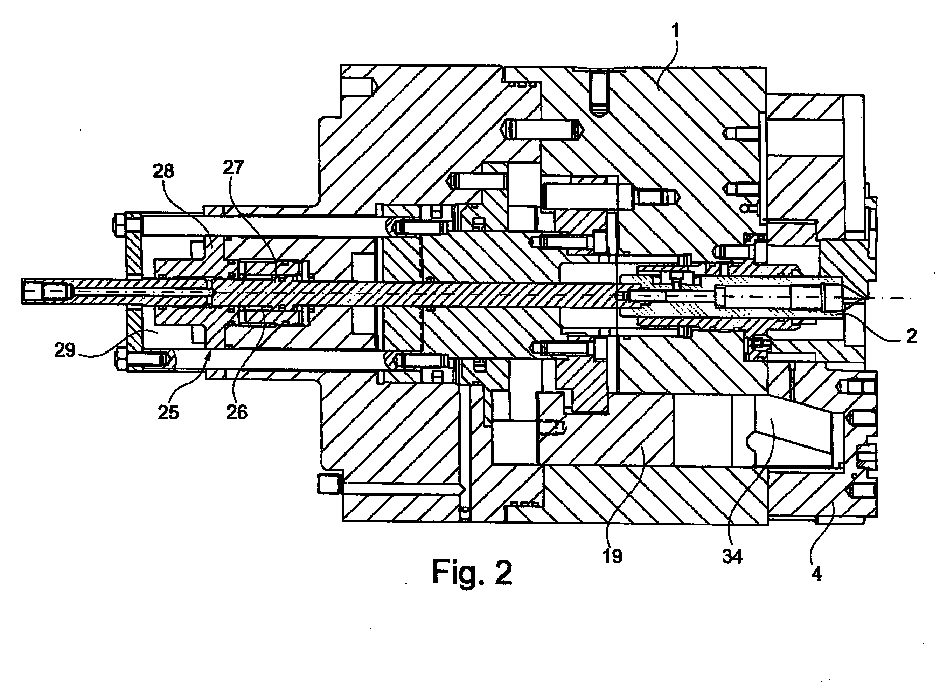

In Figur 2 ist ein aus dem Stand der Technik bekanntes Spannfutter in der Ausführung als Spannklauenfutter zum Spannen von Kurbelwellen gezeigt, wobei hier die Verstellung der Zentrierspitze 2 und der Spannbacken 4 mit Hydraulikkomponenten 25 realisiert ist. Die hier im Futterkörper 1 geführte Zentrierspitze 2 weist einen bundförmigen in einer Kolbenkammer 26 geführten Kolben 27 auf. Diese Kolbenkammer 26 befindet sich hinter einem Spannkolben 28, der seinerseits in einer Spannkolbenkammer 29 geführt ist. Er dient der radial zur Futterlängsachse 3 orientierten Verstellung der Spannbacken 4 und ist hydraulisch beaufschlagbar.

Beim Spannvorgang wird hierbei zunächst die Zentrierspitze 2 axial verstellt, bis sie an der Stirnfläche eines Werkstücks anschlägt. Anschließend wird der Spannkolben 28 zur Verstellung der Spannbacken 4 mit Hydraulikmittel beaufschlagt, um die Spannbacken 4 am Werkstück anzulegen und dieses radial zu sichern. Zur Lösung des Werkstückes kann entweder der Spannkolben 28 gleichzeitig mit dem Kolben 27 betätigt werden, oder es wird zunächst die Zentrierspitze 2 axial verstellt und anschließend werden die Spannbacken 4 gelöst.

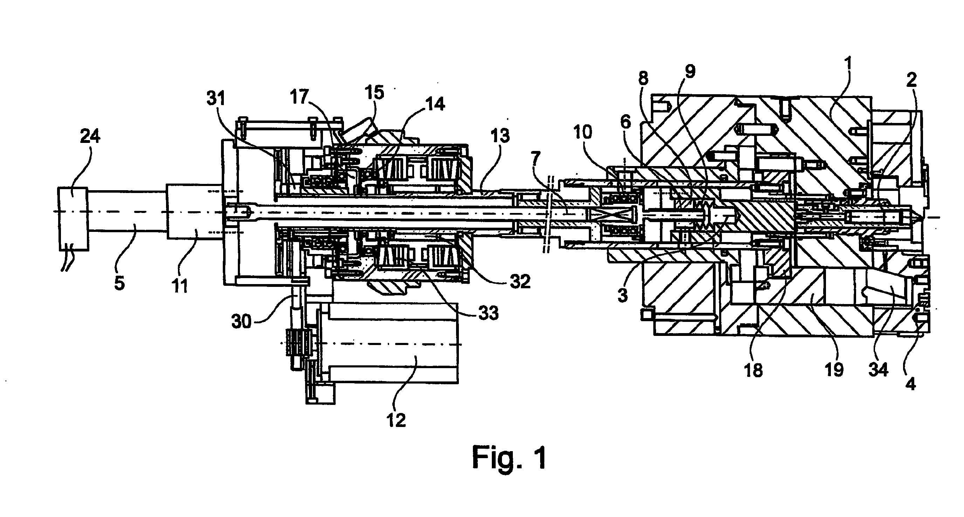

Figur 1 zeigt eine Ausführungsform des erfindungsgemäßen Spannfutters, auch in der Ausführung als Spannklauenfutter, das sich insbesondere zum Spannen von Kurbelwellen eignet, mit einer axial verstellbaren, im Futterkörper 1 geführten Zentrierspitze 2 und radial zur Futterlängsachse 3 verstellbaren Spannbacken 4. Zur Axialverstellung der Zentrierspitze 2 ist ein Elektromotor 5 vorgesehen. Der Zentrierspitze 2 ist ein Spindelglied 8 zugeordnet, das mit einer Stange 7 einen Spindeltrieb 6 ausbildet zur axialen Verstellung der Zentrierspitze 2. Zwischen dem Spindelglied 8 und der Zentrierspitze 2 ist ein federndes Element 9 in Form einer Schraubenfeder vorgesehen. Hierbei muss es sich nicht zwingend um eine Schraubenfeder handeln. Ebenso sind sonstige Federtypen, wie beispielsweise Tellerfedern, Evolutfedern, Ringfedern oder sonstige Federarten einsetzbar.

Im Futterkörper 1 ist außerdem ein Stangenlager 10 ausgebildet, in dem die Stange 7 geführt ist. Im vorliegenden Ausführungsbeispiel ist zwischen dem Elektromotor 5 und der Stange 7 ein Getriebe 11 angeordnet.

Zur Betätigung der Spannbacken 4 ist eine mit einem elektrisch betätigbaren Spannmotor 12 antreibbare Gewindehohlstange 13 vorgesehen. Die Stange 7 ist ohne Kontakt durch die Gewindehohlstange 13 durchgeführt.

Zwischen der Gewindehohlstange 13 und dem Rotor des Spannmotors 12 ist ein Gleitkeilgetriebe 14 vorgesehen, mit einem nicht umlaufenden Hohlrad 15, einem die Rotorumdrehung erfassenden Wellengenerator und einer mit der Gewindehohlstange 13 in drehmomentübertragender Weise Weise gekoppelten Stahlbüchse 17. Im gezeigten Ausführungsbeispiel ist der Rotor über einen Riementrieb 30 mit einem Antriebsrad 31 verbunden, welches den Wellengenerator 16 antreibt. Die Stahlbüchse 17 treibt die Gewindehohlstange 13 über ein Planetenrollengetriebe 32 an. Im dem Ausführungsbeispiel ist dieses Planetenrollengetriebe 32 durch mehrere koaxial zur Futterlängsachse 3 angeordnete Federn 33 gesichert, was einen sicheren Antrieb der Gewindehohlstange 13 gewährleistet.

Wie im gezeigten Ausführungsbeispiel erkennbar ist, sind der Elektromotor 5 und der Spannmotor 12 als nicht mit dem Futterkörper 1 umlaufende Bauteile der Erfindung gebildet.

Zur Verstellung der Spannbacken 4 ist ein Spannplatte 18 zwischen der Gewindehohlstange 13 und den im Futterkörper 1 geführten Mitteln 19 zur Verstellung der Spannbacken 4 ausgebildet. Auf der der Spannplatte 18 abgewandten Seite weisen die Mittel 19 zur Verstellung der Spannbacken 4 einen Spannkeil 34 auf.

Dem Elektromotor 5 ist eine regelnde Steuereinheit 24 zugeordnet. Vorzugsweise werden beim Bearbeiten die Drehzahlen der Stange 7 und der Gewindehohlstange 13 aufeinander abgestimmt, welche genau der Drehzahl des Spannfutters entspricht. Dabei ist gewährleistet, dass während des Betriebes des Spannfutters die Spannbacken 4 und die Zentrierspitze 2 ihre spannende bzw. zentrierende Position beibehalten.

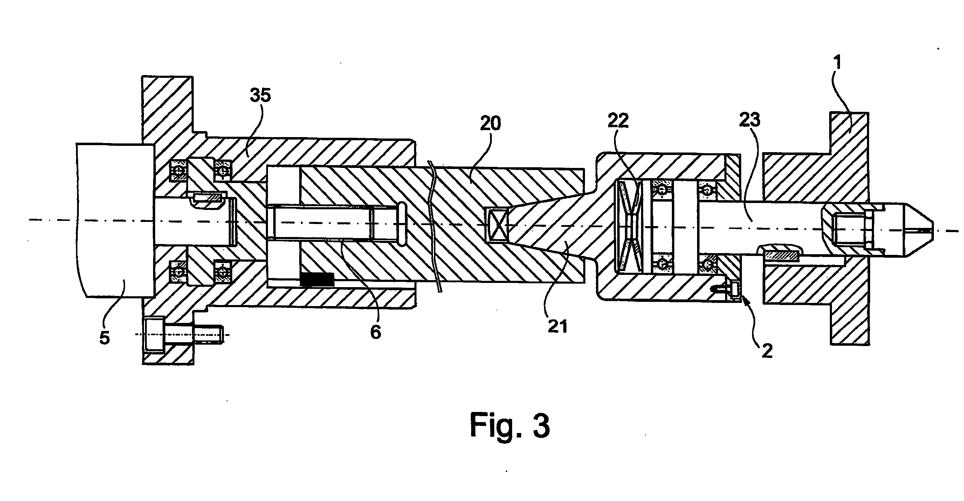

Figur 3 zeigt eine weitere Ausführungsform des erfindungsgemäßen Spannfutters, wobei hierbei zwischen der Zentrierspitze 2 und dem Elektromotor 5 eine axial verstellbare und über einen Reibschluss lösbar mit der Zentrierspitze 2 verbundene Spindelstange 20 vorgesehen ist. Die hier gezeigte Zentrierspitze 2 ist mehrteilig gebildet aus einer Spindelstangenaufnahme 21, mindestens einem Federelement 22 und einem Spitzenteil 23. Im vorliegenden Ausführungsbeispiel sind dabei Tellerfedern als Federelement 22 vorgesehen.

Zur axialen Verstellung der Spindelstange 20 ist zwischen dem Elektromotor 5 und der Spindelstange 20 ein Spindeltrieb 6 ausgebildet. Die Spindelstange 20 ist in der gezeigten Ausführungsform axial in einem Gehäuse 35 geführt.

### Bezugszeichenliste

- 1: Futterkörper
- 2: Zentrierspitze
- 3: Futterlängsachse
- 4: Spannbacken
- 5: Elektromotor
- 6: Spindeltrieb
- 7: Stange
- 8: Spindelglied
- 9: federndes Element
- 10: Stangenlager
- 11: Getriebe
- 12: Spannmotor
- 13: Gewindehohlstange
- 14: Gleitkeilgetriebe
- 15: Hohlrad
- 17: Stahlbüchse
- 18: Spannplatte
- 19: Mittel zur Verstellung der Spannbacken
- 20: Spindelstange
- 21: Spindelstangenaufnahme
- 22: Federelement
- 23: Spitzenteil
- 24: Steuereinheit
- 25: Hydraulikkomponenten
- 26: Kolbenkammer
- 27: Kolben
- 28: Spannkolben
- 29: Spannkolbenkammer
- 30: Riementrieb
- 31: Antriebsrad
- 32: Planetenrollengetriebe
- 33: Federn
- 34: Spannkeil
- 35: Gehäuse

## Patentansprüche

1. Spannfutter zum Spannen von Kurbelwellen, mit einer axial verstellbaren, im Futterkörper (1) geführten Zentrierspitze (2) und radial zur Futterlängsachse (3) verstellbaren Spannbacken (4), wobei zur axialen Verstellung der Zentrierspitze (2) ein Elektromotor (5) vorgesehen ist **dadurch gekennzeichnet, dass** zur axialen Verstellung der Zentrierspitze (2) ein Spindeltrieb (6) vorgesehen ist.

2. Spannfutter nach Anspruch 1, **dadurch gekennzeichnet, dass** der Spindeltrieb (6) zwischen einer durch den Elektromotor (5) antreibbaren Stange (7) und der Zentrierspitze (2) ausgebildet ist.

3. Spannfutter nach Anspruch 2, **dadurch gekennzeichnet, dass** ein lösbar mit der Zentrierspitze (2) verbundenes Spindelglied (8) vorgesehen ist.

4. Spannfutter nach Anspruch 3, **dadurch gekennzeichnet, dass** zwischen dem Spindelglied (8) und der Zentrierspitze (2) ein federndes Element (9) vorgesehen ist.

5. Spannfutter nach einem der Ansprüche 2 bis 4, **dadurch gekennzeichnet, dass** die Stange (7) in einem im Futterkörper (1) ausgebildeten Stangenlager (10) gelagert ist.

6. Spannfutter nach einem der Ansprüche 2 bis 5, **dadurch gekennzeichnet, dass** zwischen dem Elektromotor (5) und der Stange (7) ein Getriebe (11) ausgebildet ist.

7. Spannfutter nach Anspruch 6, **dadurch gekennzeichnet, dass** das Getriebe (11) ein Planetengetriebe ist.

8. Spannfutter nach einem der Ansprüche 1 bis 7, **dadurch gekennzeichnet, dass** zur Betätigung der Spannbacken (4) eine mit einem elektrisch betätigbaren Spannmotor (12) antreibbare Gewindehohlstange (13) vorgesehen ist.

9. Spannfutter nach Anspruch 8, **dadurch gekennzeichnet, dass** zwischen der Gewindehohlstange (13) und dem Rotor des Spannmotors (12) ein Gleitkeilgetriebe (14) vorgesehen ist, mit einem nicht umlaufenden Hohlrad (15), einem die Rotorumdrehung erfassenden Wellengenerator und einer mit der Gewindehohlstange (13) in drehmomentübertragender Weise gekoppelten Stahlbüchse (17).

10. Spannfutter nach Anspruch 8 oder 9, **dadurch gekennzeichnet, dass** eine Spannplatte (18) zwischen der Gewindehohlstange (13) und im Futterkörper (1) geführten Mitteln (19) zur Verstellung der Spannbacken (4) ausgebildet ist.

11. Spannfutter nach einem der Ansprüche 8 bis 10, **dadurch gekennzeichnet, dass** die Stange (7) ohne Kontakt durch die Gewindehohlstange (13) durchgeführt ist.

12. Spannfutter nach Anspruch 1, **dadurch gekennzeichnet, dass** zwischen der Zentrierspitze (2) und dem Elektromotor (5) eine axial verstellbare und über einen Reibschluss lösbar mit der Zentrierspitze (2) verbundene Spindelstange (20) vorgesehen ist.

13. Spannfutter nach Anspruch 11, **dadurch gekennzeichnet, dass** die Zentrierspitze (2) mehrteilig aus einer Spindelstangenaufnahme (21), mindestens einem Federelement (22) und einem Spitzenteil (23) gebildet ist.

14. Spannfutter nach Anspruch 11 oder 12, **dadurch gekennzeichnet, dass** zwischen der Spindelstange (20) und dem Rotor des Elektromotors (5) ein Spindeltrieb (6) ausgebildet ist.

15. Spannfutter nach einem der Ansprüche 1 bis 13, **dadurch gekennzeichnet, dass** eine den Elektromotor (5) regelnde Steuereinheit (24) vorgesehen ist.

16. Verfahren zum Betrieb eines Spannfutters mit einer axial verstellbaren, im Futterkörper (1) geführten Zentrierspitze (2), **gekennzeichnet durch**, eine lösbar über ein Federelement (22) mit der Zentrierspitze (2) verbundene Spindelstangenaufnahme (21), einen ein Messgerät aufweisenden Elektromotor (5) und einen Spindeltrieb (6) zur Umwandlung einer Rotationsbewegung in eine Translation wobei der Spindeltrieb (6) zur Umwandlung einer Rotationsbewegung in eine Translation **durch** die Rotation des Elektromotors (5) eine axiale Verstellung der Spindelstangenaufnahme (21) unter einer Mitnahme der Zentrierspitze (2) bewirkt bis bei einer Relativbewegung der Spindelstangenaufnahme (21) bezüglich der Zentrierspitze (2) eine Kraft gegen das Federelement (22) aufgebracht wird und die **dadurch** verrichtete Arbeit durch einen sich ändernden Messwert am Messgerät detektiert wird.

17. Verfahren nach Anspruch 16, **dadurch gekennzeichnet, dass** das Messgerät als ein Amperemeter gebildet ist und einen Stromfluss misst.

## Claims

1. A chuck for clamping crankshafts, comprising an axially displaceable centring point (2) guided in the chuck body (1) and clamping jaws (4) displaceable radially relative to the longitudinal axis (3) of the chuck, wherein an electric motor (5) is provided for the axial displacement of the centring point (2), **characterised in that** there is provided a spindle drive (6) for the axial displacement of the centring point (2).

2. A chuck according to claim 1 **characterised in that** the spindle drive (6) is provided between a rod (7) drivable by the electric motor (5) and the centring point (2).

3. A chuck according to claim 2 **characterised in that** there is provided a spindle member (8) releasably connected to the centring point (2).

4. A chuck according to claim 3 **characterised in that** there is provided a resilient element (9) between the spindle member (8) and the centring point (2).

5. A chuck according to one of claims 2 to 4 **characterised in that** the rod (7) is mounted in a rod mounting (10) in the chuck body (1).

6. A chuck according to one of claims 2 to 5 **characterised in that** a transmission (11) is provided between the electric motor (5) and the rod (7).

7. A chuck according to claim 6 **characterised in that** the transmission (11) is a planetary transmission.

8. A chuck according to one of claims 1 to 7 **characterised in that** a threaded hollow rod (13) drivable by an electrically actuable clamping motor (12) is provided for actuation of the clamping jaws (4).

9. A chuck according to claim 8 **characterised in that** provided between the threaded hollow rod (13) and the rotor of the clamping motor (12) is a strain wave gearing (14) having a non-rotary ring gear (15), a wave generator detecting the rotor rotation and a steel sleeve (17) coupled to the threaded hollow rod (13) in torque-transmitting relationship.

10. A chuck according to claim 8 or claim 9 **characterised in that** a clamping plate (18) is provided between the threaded hollow rod (15) and means (19) guided in the chuck body (1) for the displacement of the clamping jaws (4).

11. A chuck according to one of claims 8 to 10 **characterised in that** the rod (7) is passed without contact through the threaded hollow rod (13).

12. A chuck according to claim 1 **characterised in that** provided between the centring point (2) and the electric motor is an axially displaceable spindle rod (20) releasably connected to the centring point (2) by way of a friction engagement.

13. A chuck according to claim 11 **characterised in that** the centring point (2) is formed as a multi-part structure from a spindle rod mounting (21), at least one spring element (22) and a point portion (23).

14. A chuck according to claim 11 or claim 12 **characterised in that** a spindle drive (6) is provided between the spindle rod (20) and the rotor of the electric motor (5).

15. A chuck according to one of claims 1 to 13 **characterised in that** there is provided a control unit (24) for regulating the electric motor (5).

16. A method of operating a chuck having an axially displaceable centring point (2) guided in the chuck body (1), **characterised by** a spindle rod mounting (21) connected releasably to the centring point (2) by way of a spring element (22), an electric motor (5) having a measuring device, and a spindle drive (6) for converting a rotary movement into a translatory movement, wherein the spindle drive (6) for converting a rotary movement into a translatory movement by the rotation of the electric motor (5) implements a axial displacement of the spindle rod mounting (21) with entrainment of the centring point (2) until with a relative movement of the spindle rod mounting (21) with respect to the centring point (2) a force is applied against the spring element (22) and the work done thereby is detected by a changing measurement value at the measuring device.

17. A method according to claim 16 **characterised in that** the measuring device is in the form of an ammeter and measures a flow of current.

## Revendications

1. Mandrin de serrage pour le serrage de vilebrequins, comprenant une pointe de centrage (2) réglable axialement, guidée dans le corps de mandrin (1), et des mors de serrage (4) réglables radialement par rapport à l'axe longitudinal de mandrin (3), un moteur électrique (5) étant prévu pour le réglage axial de la pointe de centrage (2), **caractérisé en ce qu'**un mécanisme à broche (6) est prévu pour le réglage axial de la pointe de centrage (2).

2. Mandrin de serrage selon la revendication 1, **caractérisé en ce que** le mécanisme à broche (6) est formé entre une tige (7) pouvant être entraînée par le moteur électrique (5) et la pointe de centrage (2).

3. Mandrin de serrage selon la revendication 2, **caractérisé en ce qu'**un segment de broche (8) relié de manière détachable à la pointe de centrage (2) est prévu.

4. Mandrin de serrage selon la revendication 3, **caractérisé en ce qu'**un élément élastique (9) est prévu entre le segment de broche (8) et la pointe de centrage (2).

5. Mandrin de serrage selon l'une des revendications 2 à 4, **caractérisé en ce que** la tige (7) est montée dans un palier de tige (10) formé dans le corps de mandrin (1).

6. Mandrin de serrage selon l'une des revendications 2 à 5, **caractérisé en ce qu'**un engrenage (11) est formé entre le moteur électrique (5) et la tige (7).

7. Mandrin de serrage selon la revendication 6, **caractérisé en ce que** l'engrenage (11) est un engrenage planétaire.

8. Mandrin de serrage selon l'une des revendications 1 à 7, **caractérisé en ce qu'**une tige filetée creuse (13) pouvant être entraînée par un moteur de serrage (12) actionnable électriquement est prévue pour actionner les mors de serrage (4).

9. Mandrin de serrage selon la revendication 8, **caractérisé en ce qu'**un engrenage à ondes de contrainte (14) est prévu entre la tige filetée creuse (13) et le rotor du moteur de serrage (12), avec une couronne dentée (15) non tournante, un générateur d'ondes (16) qui détecte la rotation du rotor et une douille en acier (17) couplée à la tige filetée creuse (13) d'une manière permettant la transmission du couple.

10. Mandrin de serrage selon la revendication 8 ou 9, **caractérisé en ce qu'**une plaque de serrage (18) est formée entre la tige filetée creuse (13) et des moyens (19), guidés dans le corps de mandrin (1), pour le réglage des mors de serrage (4).

11. Mandrin de serrage selon l'une des revendications 8 à 10, **caractérisé en ce que** la tige (7) passe sans contact à travers la tige filetée creuse (13).

12. Mandrin de serrage selon la revendication 1, **caractérisé en ce qu'**une tige de broche (20), réglable axialement et reliée de manière détachable à la pointe de centrage (2) par une liaison par friction, est prévue entre la pointe de centrage (2) et le moteur électrique (5).

13. Mandrin de serrage selon la revendication 11, **caractérisé en ce que** la pointe de centrage (2) est formée en plusieurs parties d'un logement de tige de broche (21), d'au moins un élément élastique (22) et d'une partie de pointe (23).

14. Mandrin de serrage selon la revendication 11 ou 12, **caractérisé en ce qu'**un mécanisme à broche (6) est formé entre la tige de broche (20) et le rotor du moteur électrique (5).

15. Mandrin de serrage selon l'une des revendications 1 à 13, **caractérisé en ce qu'**une unité de commande (24) qui régule le moteur électrique (5) est prévue.

16. Procédé de fonctionnement d'un mandrin de serrage comprenant une pointe de centrage (2) réglable axialement, guidée dans le corps de mandrin (1), **caractérisé par** un logement de tige de broche (21) relié de manière détachable à la pointe de centrage (2) par l'intermédiaire d'un élément élastique (22), un moteur électrique (5) présentant un appareil de mesure et un mécanisme à broche (6) pour transformer un mouvement de rotation en une translation, lequel mécanisme à broche pour transformer un mouvement de rotation en une translation provoque, par la rotation du moteur électrique (5), un déplacement axial du logement de tige de broche (21) tout en entraînant la pointe de centrage (2) jusqu'à ce que, à l'occasion d'un mouvement relatif du logement de tige de broche (21) par rapport à la pointe de centrage (2), une force soit exercée contre l'élément élastique (22) et que le travail ainsi accompli soit détecté par un changement de la valeur mesurée sur l'appareil de mesure.

17. Procédé selon la revendication 16, **caractérisé en ce que** l'appareil de mesure est conformé en ampèremètre et mesure un courant électrique.
